# EUROPÄISCHE PATENTSCHRIFT

(11) **EP 0 485 651 B1**
(45) Veröffentlichungstag und Bekanntmachung des Hinweises auf die Patenterteilung: **21.06.1995**
(21) Anmeldenummer: 90121699.4
(22) Anmeldetag: 13.11.1990
(51) Int. Cl.: F16L 9/12, F16L 47/02, B29C 65/00

(54) **Werkzeug zum Polyfusions-Verschweissen von extrudierten Kunststoff-Aluminium-Verbundrohren mit Fittings oder Formteilen**
Tool for polyfusion welding of extruded plastic-aluminium compound pipes with fittings or moulded parts
Outil pour soudage par polyfusion des tuyaux extrudés en matière plastique-aluminium avec des embouts ou des pièces moulées

(43) Veröffentlichungstag der Anmeldung: 20.05.1992
(73) Patentinhaber: Rosenberg, Gerhard, 57439 Attendorn (DE)
(72) Erfinder: Rosenberg, Gerhard, 57439 Attendorn (DE)
(74) Vertreter: Pürckhauer, Rolf, Dipl.-Ing.

(56) Entgegenhaltungen:
- EP-A- 0 186 168
- DE-A- 2 454 706
- DE-A- 3 319 515
- DE-A- 3 636 737
- DE-C- 3 527 440
- GB-A- 1 171 122

## Beschreibung

Die Erfindung bezieht sich auf ein Werkzeug zum Polyfusions-Verschweißen eines Kunststoff-Aluminium-Verbundrohres, das eine Verstärkungsschicht aus Aluminiumfolie zwischen einem Kunststoff-Innenrohr und einer Kunststoff-Außenschicht aufweist, mit einem Fitting oder Formteil, wobei das elektrisch beheizbare Werkzeug aus einer Heizbuchse zum Erwärmen des abgeschälten Endes des Verbundrohres und aus einem Heizdorn zum Erwärmen des Fittings oder Formteils besteht, wobei die Bohrung der Heizbuchse nach innen hin im Durchmesser reduziert ist und wobei der Heizdorn in entsprechender Weise im Außendurchmesser zum Ende hin reduziert ist.

Ein Verbundrohr der vorerwähnten Art ist beispielsweise aus der DE 36 36 737 A1 bekannt. Bei diesem bekannten extrudierten Kunststoffrohr ist eine relativ dünne elektrisch leitende Schicht aus einer Aluminiumfolie auf das eigentliche, den Nenndruckwerten entsprechende Kunststoffrohr mit Längsüberlappung aufgebracht, wobei eine dünne Kunststoff-Außenhaut als Dielektrikum aufextrudiert ist.

Ein gattungsgemäßes Werkzeug ist aus DE-A-24 54 706 bekannt. Dabei sind die Heizbuchse innen und der Heizdorn außen kegelförmig ausgebildet. Beim verschweißen von insbesondere dünnwandigen Rohren muß in das entsprechend außen konisch gestaltete Ende des Rohres ein Stützring aus Metall eingesetzt werden, um ein Einfallen bzw. Aufweiten der abgeschrägten Rohrenden zu vermeiden. Das ist umständlich und ergibt bei den gattungsgemäßen Kunststoff-Verbundrohren eine unsichere Schweißverbindung, wie im folgenden Absatz erläutert.

Wenn solche Kunststoff-Verbundrohre mit Fittings bzw. Formteilen fusionsverschweißt werden, wird das jeweils zu verschweißende Ende des Kunststoffrohres bis unter die Aluminiumfolie abgeschält, und es werden dieses Rohrende und das Formteil, z.B. Verbindungsmuffe, Winkelstück o. dgl., bis zum Fließen des Kunststoffes mit entsprechend beheizten Werkzeugen erhitzt, dann von den Werkzeugen getrennt und ineinander geschoben. Will man nun mit geringerer Wandstärke ein gleichbelastbares Verbundrohr schaffen, so kann es bei der bisherigen Schäl- und Schweißtechnik vorkommen, daß sich vor dem eingeschobenen Ende des Kunststoffrohres trotz mitgeschobener Kunststoffmasse ein Radialspalt bildet, so daß bei Druck- bzw. thermischer Belastung des Kunststoff-Rohrsystems, wenn dieses beispielsweise Wasser unter Druck fördert, dieses Medium zwischen Aluminiumfolie und Kunststoff eindringt und das Rohr zum Platzen bringt. Auch würde der Kontakt der Aluminiumfolie mit dem Fördermedium zur Oxidation bzw. Korrosion der Aluminiumfolie führen.

Der Erfindung liegt die Aufgabe zugrunde, ein Werkzeug zu schaffen, das die vorgeschilderten Schwierigkeiten durch eine verbesserte Schweißtechnik vermeidet.

Diese Aufgabe wird bei dem Werkzeug der eingangs genannten Gattung erfindgungsgemäß dadurch gelöst, daß die Durchmesserreduzierungen in der Heizbuchse und am Heizdorn abgestuft-zylindrisch ausgebildet sind.

Durch die erfindungsgemäß angewandte Stufenschweißung wird das Aluminium wirksam vor dem Medium geschützt. Eine Korrosionsgefahr besteht somit für das innenliegende Aluminium nicht. Entsprechend den Schweißwerkzeugen sind auch die Fittings bzw. Formteile innen abgestuft. Beim Verschweißen wird eine homogene Verbindung geschaffen.

Das Verbundrohr kann in der Gesamt-Wandstärke dünner gehalten werden als die bisher bekannten Kunststoffrohre für gleiche Nennbelastung. Das ergibt einen größeren Innendurchmesser. Weitere Vorteile sind der geringere Materialaufwand und die schnellere Verarbeitung bei der Produktion. Ferner ist kein schweißtiefenlanges Abschälen des Rohrendes mehr notwendig.

Die Erfindung wird nunmehr anhand der sie beispielsweise wiedergebenden Zeichnung beschrieben. Dabei zeigt
- Fig. 1: eine Seitenansicht eines zum Verschweißen vorbereiteten Endes eines Kunststoff-Aluminium-Verbundrohres,
- Fig. 2: einen Schnitt nach der Linie II-II in Fig. 1,
- Fig. 3: im Axialschnitt die Heizbuchse des Werkzeugs zum Polyfusions-Verschweißen,
- Fig. 4: in Seitenansicht den zugehörigen Schweißdorn und
- Fig. 5: halb axial geschnitten die polyfusionsgeschweißte Verbindung eines Verbundrohrendes mit einem Formstück, hier einer Endkappe.

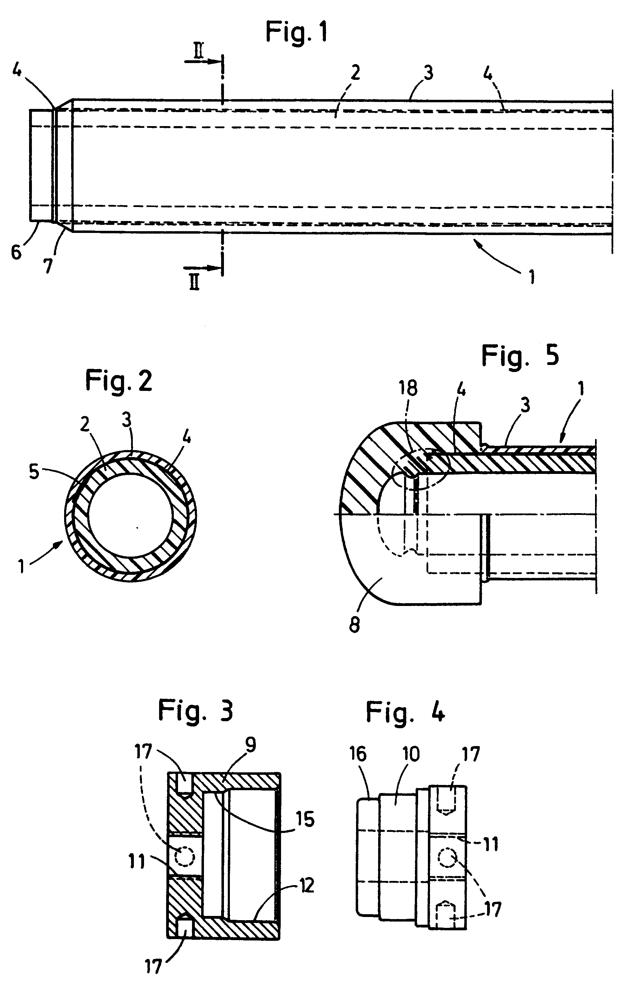

Das in den Fign.1 und 2 dargestellte Kunststoff-Aluminium-Verbundrohr 1 besteht aus einem Kunststoff-Innenrohr 2, einer Kunststoff-Außenschicht 3 und einer zwischen Innenrohr 2 und Außenschicht 3 eingebetteten Aluminiumfolie 4, die in Längsrichtung des Verbundrohres 1 bei 5 überlappt ist. Von der Gesamt-Wandstärke des Verbundrohres 1 nimmt die Kunststoff-Außenschicht 3 etwa ein Viertel ein.

Zum Polyfusions-Verschweißen des in Fig. 1 dargestellten Endes des Verbundrohres 1 wird dieses vom Ende her bis auf ein etwa 5 mm langes zylindrisches Reststück 6 mit einem Werkzeug heruntergeschält, das im Prinzip einem Bleistiftspitzer gleicht und ein Messer von einer solchen Form aufweist, daß die Aluminiumfolie 4 mit weggenommen wird und vom zylindrischen Reststück 6 bis zum Außendurchmesser des Verbundrohres 1 eine kegelstumpfartige Übergangsfläche 7 gebildet wird.

Die Gesamt-Wandstärke des Verbundrohres 1 beträgt bei einem 32er Rohr (Außendurchmesser 32 mm) 5,4 mm, und der Innendurchmesser ist 21,2 mm. Im Vergleich dazu hat das 32er Rohr herkömmlicher Ausführung ohne Aluminiumfolie-Verstärkung eine Wandstärke von 6,4 mm und einen Innendurchmesser von 19,2 mm. Das Gewicht des neuen Verbundrohres beträgt 0,444 kg/m im Vergleich zum Gewicht des herkömmlichen Kunststoffrohres von 0,499 kg/m. Beide Vergleichsausführungen entsprechen den Rohren der Reihe 7 mit PN 25.

Das zum Polyfusions-Verschweißen des Verbundrohres 1 mit einem Formteil oder Fitting (siehe Endkappe 8 in Fig. 5) benötigte Werkzeug besteht aus einer elektrisch beheizten Heizbuchse 9 (Fig. 3) und einem ebenfalls elektrisch beheizten Heizdorn 10 (Fig. 4). Die Heizbuchse 9, die zum Erwärmen des Endes des Verbundrohres 1 dient, und der Heizdorn 10, der zum Erwärmen des Formteils, z.B. der Endkappe 8, oder eines Fittings dient, haben jeweils eine konzentrische Gewindebohrung 11, mit der sie an einem elektrischen, thermostatisch gesteuerten Heizgerät (nicht dargestellt) angeschraubt werden.

Die Bohrung 12 der z.B. aus Aluminium bestehenden Heizbuchse 9 der Fig. 3 ist nach innen hin im Durchmesser bei 15 zylindrisch verjüngt, während der Heizdorn 10 im Außendurchmesser ebenfalls entsprechend zylindrisch bei 16 reduziert ist.

Zum Ansetzen eines Schlüssels beim Anschrauben an das Heizgerät weisen die Heizbuchse 9 und der Heizdorn 10 Radialbohrungen 17 auf.

Wie in Fig. 5 durch die ineinanderfließende Kunststoff-Schraffur in dem strichpunktiert gekennzeichneten Bereich 18 angedeutet, wird hier eine homogene Schweißverbindung geschaffen, die das Ende der Aluminiumfolie 4 völlig vom Medium, z.B. Wasser, trennt, so daß dieses die Aluminiumfolie 4 nicht unterwandern und zum Korrodieren bringen kann.

## Patentansprüche

1. Werkzeug zum Polyfusions-Verschweißen eines Kunststoff-Aluminium-Verbundrohres, das eine Verstärkungsschicht aus Aluminiumfolie (4) zwischen einem Kunststoff-Innenrohr (2) und einer Kunststoff-Außenschicht (3) aufweist, mit einem Fitting oder Formteil (8), wobei das elektrisch beheizbare Werkzeug aus einer Heizbuchse (9) zum Erwärmen des abgeschälten Endes des Verbundrohres (1) und aus einem Heizdorn (10) zum Erwärmen des Fittings oder Formteils (8) besteht, wobei die Bohrung (12) der Heizbuchse (9) nach innen hin im Durchmesser reduziert ist und wobei der Heizdorn in entsprechender Weise im Außendurchmesser zum Ende hin reduziert ist, gekennzeichnet durch eine abgestufte zylindrische Reduzierung (15 bzw. 16) des Innendurchmessers der Heizbuchse (9) und des Außendurchmessers des Heizdorns (10).

## Claims

1. A tool for polyfusion welding of an extruded plastic-aluminium composite pipe, which comprises a reinforcing layer of aluminium foil (4) between a plastics inner pipe (2) and a plastics outer layer (3), to a fitting or moulded part (8), wherein the electrically heated tool consists of a heating bush (9) for heating the stripped end of the composite pipe (1) and a heating mandrel (10) for heating the fitting or moulded part (8), wherein the bore (12) of the heating bush (9) is reduced in diameter towards the interior and wherein the heating mandrel is reduced in outer diameter in corresponding manner towards its end, characterized by a stepped cylindrical reduction (15, 16 respectively) of the inner diameter of the heating bush (9) and the outer diameter of the heating mandrel (10).

## Revendications

1. Outil de soudage par polyfusion d'un tube composite en matière plastique et en aluminium, qui comporte une couche de renfort constituée d'une feuille (4) d'aluminium insérée entre un tube (2) intérieur en matière plastique et une couche (3) extérieure en matière de plastique, à un raccord ou une pièce (8) moulée, l'outil, qui peut être chauffé électriquement, étant constitué d'une douille (9) de chauffage destinée à chauffer l'extrémité taillée du tube (1) composite et d'un mandrin (10) de chauffage destiné à chauffer le raccord ou la pièce (8) moulée, le diamètre du trou (12) de la douille (9) de chauffage se réduisant vers l'intérieur et le diamètre extérieur du mandrin se réduisant de manière correspondante vers l'extrémité, caractérisé par une réduction (15 et 16) par paliers, cylindrique du diamètre intérieur de la douille (9) de chauffage et du diamètre extérieur du mandrin (10) de chauffage.
